## Europäisches Patentamt
## European Patent Office
## Office européen des brevets

(19)

(11) Veröffentlichungsnummer: **0 360 918**

**A1**

(12) **EUROPÄISCHE PATENTANMELDUNG**

(21) Anmeldenummer: **88116234.1**

(22) Anmeldetag: **30.09.88**

(51) Int. Cl.⁵: **H04N 5/18**

(43) Veröffentlichungstag der Anmeldung:
**04.04.90 Patentblatt 90/14**

(84) Benannte Vertragsstaaten:
**AT BE CH DE ES FR GB GR IT LI LU NL SE**

(71) Anmelder: **COMPUTER GESELLSCHAFT KONSTANZ MBH**
**Max-Stromeyer-Strasse 116**
**D-7750 Konstanz(DE)**

(72) Erfinder: **Stehle, Richard, Dipl.-Ing.(FH)**
**Wollmatinger Strasse 90**
**D-7750 Konstanz(DE)**
Erfinder: **Lorenz, Hans-Joachim**
**An der Kindswiese 16**
**D-7760 Radolfzell 18(DE)**
Erfinder: **Dowe, Dietmar, Dipl.-Ing.**
**Blütenhang 20**
**D-7768 Stockach-Wahlwies(DE)**

(74) Vertreter: **Fuchs, Franz-Josef, Dr.-Ing. et al**

**D-8026 Herrsching(DE)**

(54) **Schaltungsanordnung zur Klemmung von in einer Videosignalfolge enthaltenen Schwarzwert-Referenz-signale.**

(57) Ausgehend von einem CCD-Zeilensensor (2) dessen Ausgangssignale in einem Videoverstärker (4) verstärkt und in einem nachgeschalteten Analog/Digital-Wandler (5) digitalisiert werden, sowie einem vom Schwarzreferenz-Signal gesteuerten Speicherelement (D-FF) für eine den Videoverstärker (4) beeinflussende Stellgröße ist ein mit allen Ausgängen des A/D-Wandlers verbundenes NOR-Glied (NOR) vorgesehen, dessen Ausgang mit dem Eingang eines durch das Schwarzreferenz-Signal (BR) getakteten D-Flip-Flop (D-FF) verbunden ist. Ferner ist dem D-Flip-Flop ein bezüglich seiner Eingangsspannung symmetrisch angesteuerter Integrator (6) nachgeschaltet, dessen rampenförmig abfallende bzw. ansteigende Ausgangsspannung am Eingang des Videoverstärkers (4) zur Signalspannung des Zeilensensors (2) hinzuaddiert wird.

FIG 2

# Schaltungsanordnung zur Klemmung von in einer Videosignalfolge enthaltenen Schwarzwert-Referenzsignalen

Die Erfindung betrifft eine Schaltung zur Klemmung von Schwarzwert-Referenzsignalen nach den Merkmalen des Oberbegriffs des Anspruchs 1.

Bei der optischen Zeichen- und Bildmustererkennung werden vorzugsweise in Halbleitertechnik aufgebaute Bild- und Zeilen- Sensoren, insbesondere Sensoren in integrierter CCD-Schaltungstechnik verwendet. Letztere liefern an ihren Ausgängen üblicherweise Videosignale, die hinsichtlich der Verstärkung, der Empfindlichkeit und der Einstellung auf einen definierten Schwarzwert noch entsprechend aufbereitet werden müssen. Die Einstellung auf einen definierten Schwarzwert nennt man in der Fernsehtechnik vielfach "Schwarzpegelklemmung". Ein üblicher erwünschter Pegel für das "Schwarz" entsprechende Signal ist null Volt. Dieser Schwarzpegel ist nicht nur von Typ zu Typ, sondern auch von Exemplar zu Exemplar sehr unterschiedlich und kann zusätzlich auch von der Temperatur des Siliziumchips abhängen.

Es besteht deshalb der Wunsch nach einer Schaltung, die das Ausgangssignal von CCD-Sensoren auf einen definierten Gleichspannungsanteil setzt, und zwar insbesondere so, daß dem Videosignal "Schwarz" der Signalpegel null Volt zugeordnet ist. Das hier zu lösende Problem ist an sich aus der Fernsehtechnik bekannt, weil das Fernsehsignal oft ohne Gleichspannungsanteil übertragen wird. Im zeitlichen Verlauf der Video-Signalspannung tritt aber eine definierte Form, die sogenannte "Schwarzschulter" auf, auf die das Fernsehsignal meist mit einer einfachen Schaltung aus Längskondensator sowie Quer-Widerstand und Quer-Diode geklemmt werden kann. Diese Schaltung hat jedoch den Nachteil, daß der Kondensator und der Widerstand ein RC-Glied bilden, dessen Eckfrequenz weit genug außerhalb des zu übertragenden Frequenz bandes liegen muß. Außerdem ist die Schaltung generell zu ungenau, weil die von Dioden-Typ, vom verwendeten Exemplar und von der Temperatur abhängige Schleusenspannung der Klemmdiode in den Schwarzpegel eingeht.

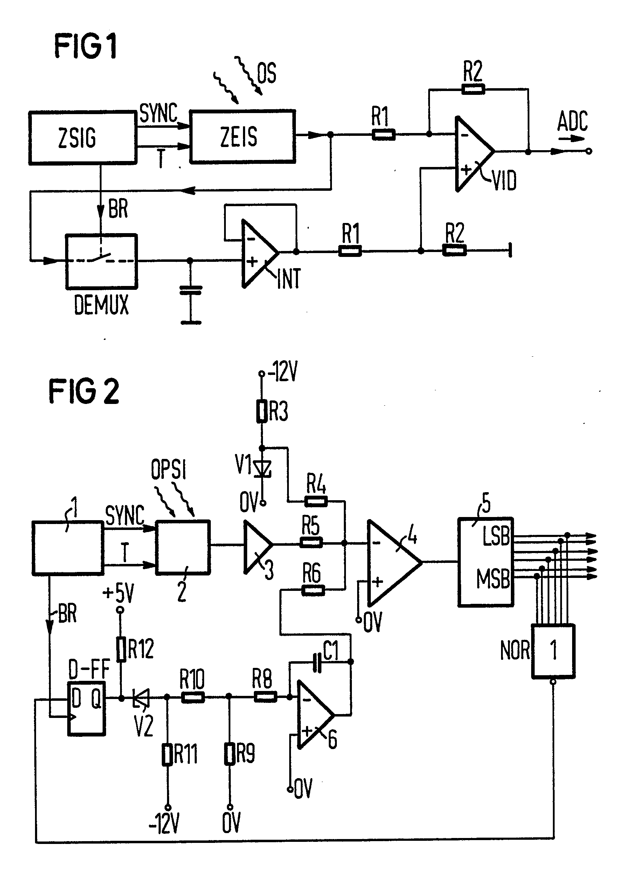

Bei CCD-Sensoren, bei denen in die Video-Signalfolge an definierter Stelle Schwarzreferenz-Bildelemente eingefügt werden, wird der Referenzpegel aus der Signalfolge "herausgefiltert", gespeichert und vom aktuellen Videosignal subtrahiert. Das Prinzip einer derartigen Schaltung ist in Figur 1 dargestellt. Sie zeigt einen für den Empfang optischer Signale OS bestimmten CCD-Zeilensensor ZEIS, dem aus einer Zeitsignalschaltung ZSIG ein Zyklus-Synchronsignal SYNC und ein CCD-Transporttakt T zugeführt werden. Im Ausgangssignal des CCD-Zeilensensors ZEIS sind an definierter Stelle Schwarzreferenz-Bildelemente eingefügt, die mit Hilfe eines Demultiplexers DEMUX, getaktet durch das Schwarzwert-Referenzsignal BR, herausgegriffen, in einem nachfolgenden Integrator INT gespeichert und in einem Videosignalverstärker VID vom aktuellen Videosignal des CCD-Sensors ZEIS subtrahiert werden. Schließlich wird das Ausgangssignal des Videosignalverstärkers VID noch einem nachgeschalteten Analog-Digital-Wandler ADC zugeführt. Bei dieser Schaltung erfolgt die Schwarzwert-Einstellung zwar unter Umgehung des A/D-Wandlers ADC, um die damit verbundenen hohen Genauigkeitsanforderungen bei der schnellen A/D-Wandlung zu umgehen, dennoch läßt sich die gewünschte Genauigkeit wegen der im Bereich des Analog-Demultiplexers DEMUX und des Videosignalverstärkers VID liegenden Fehlerquellen nur mit einem relativ hohen Entwicklungs- und Schaltungsaufwand erreichen.

Der vorliegenden Erfindung liegt deshalb die Aufgabe zugrunde, für die Schwarzwert-Einstellung eines optischen, insbesondere in CCD-Schaltungstechnik aufgebauten Abtastsensors eine Lösung zu finden, bei dem die Erfüllung der Genauigkeitsanforderungen und der damit verbundene Aufwand in einem vergleichsweise günstigen Verhältnis zueinander stehen.

Die Lösung dieser Aufgabe ergibt sich erfindungsgemäß durch die Merkmale des Anspruchs 1. Die gewünschte Genauigkeit wird hier mit relativ geringem Aufwand durch einen sogenannten Integral-Regler erreicht, der das Videosignal auf den geforderten Schwarzwert einregelt. Der Regelkreis ist dabei um den A/D-Wandler herumgebaut, so daß die geforderte Genauigkeit ohne weitere Meßglieder erreicht werden kann. Außerdem genügt für die Speicherung der digitalen Regelgröße an Stelle des in Analogtechnik aufwendigen Speichers ein einfaches Flip-Flop.

Vorteilhafte Weiterbildungen des Erfindungsgedankens sind in den Unteransprüchen angegeben.

Die Erfindung wird im folgenden anhand des in Fig. 2 dargestellten Ausführungsbeispiels näher erläutert.

Die in Fig. 2 dargestellte Schaltung zeigt im Hauptsignalweg eine Zeitsignalschaltung 1 zur Erzeugung des Zyklus-Synchron-Signals SYNC und des CCD-Transporttaktes T für einen CCD-Zeilensensor 2, der die optischen Signale OPSI in entsprechende elektrische Analogsignale umwandelt. Sie zeigt ferner einen Pufferspeicher 3 zur Zwischenspeicherung der Analogsignale, einen Videoverstärker 4 und einen Analog-Digital-Wandler 5.

Im seriellen analogen Videosignal des CCD-Zeilensensors 2 liegen jeweils mindestens einmal pro Zeilenzyklus die bereits erwähnten Schwarzreferenz-Bildelemente. Diese Schwarzreferenz-Bildelemente erscheinen jeweils zu einem definierten Zeitpunkt, den die Zeitsignal-Schaltung 1 durch ein Signal BR markiert. Zu diesem Zeitpunkt ist das analoge Videosignal definitionsgemäß Schwarz, d.h. das Ausgangssignal des Videoverstärkers 4 soll zu diesem Zeitpunkt 0 Volt betragen, was am Ausgang des A/D-Wandlers 5 der Quantisierungsstufe Nr. 0 entspricht. Das verstärkte Videosignal des CCD-Zeilensensors 2 wird im A/D-Wandler 5 mit beispielsweise 6 bit Genauigkeit digitalisiert. Eine am Ausgang des A/D-Wandlers 5 vorgesehene NOR-Verknüpfung NOR aller 6 bits liefert die Aussage: "Ausgangssignal ist kleiner als die Quantisierungsstufe Nr. 1". Dies ist die Regelgröße des Regelkreises. Sie hat den Vorteil, daß sie exakt die erforderliche Genauigkeit hat und daß sie sich als 1-Bit-Signal leicht digital speichern läßt.

Diese 1-Bit-Regelgröße wird zu dem durch das Signal BR definierten Zeitpunkt in einem D-Flip-Flop D-FF gespeichert und für eine Zeilenzykluszeit bereitgehalten. Diese Regelgröße steuert nun das Vorzeichen am Eingang eines Integrators 6 auf folgende Weise. Hat das Regelgröße-bit den Wert "Eins", d.h., daß das Ausgangssignal zu niedrig ist, so wird abwärts integriert und der Integrator 6 liefert eine rampenförmig abfallende Spannung. Damit fällt auch die Spannung am invertierenden Eingang des Videoverstärkers 4 ab mit der Folge, daß die Spannung am Ausgang des Videoverstärkers 4 zunimmt. Das Ausgangssignal des A/D-Wandlers 5 wird dann ebenfalls größer, und die Regelgröße bewegt sich in Richtung auf den Wert "Null". Der Regelkreis ist also vorzeichenrichtig geschlossen. Daraus folgt, daß es sich im gezeigten Beispiel um einen 2-Punkt-Regler handelt, bei dem das Integralverhalten unüblicherweise im Regler und nicht in der Strecke liegt.

2-Punkt-Regler haben nun bekanntlich den Nachteil, daß sie schwingen. Der Gefahr, daß durch diese Schwingung die Genauigkeit im eingeregelten Zustand unnötig beeinträchtigt wird, kann nun dadurch begegnet werden, daß die Steilheit der Integrator-Rampen bei beiden Vorzeichen so gering wie möglich gemacht wird. Nachteilig ist dabei, daß die Zeit für den Einregelvorgang beliebig lang wird. Der beste Kompromiß zwischen Genauigkeit und Einregelzeit ist dann erreicht, wenn die Integrator-Rampe gerade ein oder zwei Zeilenzykluszeiten braucht, um den Regelkreis durch eine Digitalisierungsstufe des A/D-Wandlers zu führen.

Der ungünstigste Fall für die Einregelzeit liegt vor, wenn das Videosignal die maximale Offset-Spannung, z.B. 15 V, hat und die Rampe eine Steilheit von einer Quantisierungsstufe in zwei Zeilenzeiten besitzt. Eine Quantisierungsstufe ist in dem gewählten Beispiel 1/64 der größtmöglichen Videoamplitude (von z.B. 1 V) also 1/64 V. Der Regelkreis durchläuft also einen Spannungshub von 1 V in 2 x 64 Zeilenzeiten oder 15 V in 1 920 Zeilenzeiten. Selbst in relativ schnellen Abtastern ist die Zeilenzeit etwa 1,5 ms lang, so daß der Einregelvorgang erst nach 2,88 s sicher abgeschlossen wäre.

Diese Einregelzeit läßt sich nun mit geringem Aufwand halbieren, wenn man dafür sorgt, daß der Integrator 6 im ungünstigsten Fall nicht den ganzen, sondern nur den halben Offset-Spannungsbetrag zu durchlaufen braucht. Der Integrator 6 wird deshalb nach dem Einschalten bei der Hälfte der maximal möglichen Offset-Spannung gestartet. Dabei wird dieser "Halbwert" durch Addition über einen eigenen Eingang in den Summierpunkt des Videoverstärkers 5 eingespeist, an welchem bereits das über den Widerstand R5 zugeführte Videosignal und die über den Widerstand R6 zugeführte Rampenspannung des Integrators 6 voneinander subtrahiert werden. Hierzu dient der am invertierenden Eingang des Videoverstärkers 5 vorgesehene Spannungsteiler, bestehend aus dem Widerstand R3 und der Diode V1 sowie aus dem zwischen Teilerabgriff und Verstärkereingang liegenden Widerstand R4. Dieser Widerstand R4 hat die gleiche Größe wie die soeben erwähnten Widerstände R5 und R6.

Ein zwischen dem Ausgang des D-Flip-Flops D-FF und dem Integrator 6 eingeschaltetes Netzwerk hat im einzelnen folgende Funktionen: Der Widerstand R12 ersetzt zunächst die TTL-Last am Ausgang des D-Flip-Flops D-FF und sorgt für eine definiert hohe Ausgangsspannung im "High"-Zustand. Die Diode V2 und der Widerstand R11 verschieben dann den "Low"/"High"-Spannungshub so, daß er symmetrisch um null Volt herumliegt. Der Integrator 6 wird also mit etwa gleich großem positiven bzw. negativen Signal gesteuert, d.h. die Rampenspannung hat in aufsteigender und in absteigender Richtung etwa gleich große Steilheit. Der Betrag dieser Steilheit wird mit der Zeitkonstante des aus dem Widerstand R8 und der zwischen dem Ausgang und dem Eingang des Integrators 6 liegenden Kapazität C1 gebildeten Zeitgliedes eingestellt.

Hierbei werden eine zu große Kapazität und ein zu großer Widerstand dadurch vermieden, daß das Steuersignal zuvor mit dem Spannungsteiler, bestehend aus den Widerständen R9 und R10, so weit heruntergeteilt wird, wie es die Eingangs-Offset-Spannung des Integrators 6 ohne Genauigkeitsverlust erlaubt.

Der Integrator 6 kann gegebenenfalls auch in digitaler Schaltungstechnik realisiert werden. In diesem Fall zählt dann ein binärer Zähler, wenn der Q-Ausgang des D-Flip-Flops D-FF "High" ist, mit jedem Zyklus-Synchronimpuls SYNC um eine Grauwertstufe abwärts. Ein Digital/Analogwandler wandelt dann den Zählerstand in einen Analogwert um, der über den Widerstand R6 dem subtrahierenden Videoverstärker 5 zugeführt wird.

Die in Fig. 2 gezeigte Schaltung kann statt zur Schwarzwert-Regelung mit genau gleichem Aufbau bei passender Wahl des Signals BR auch zur Regelung des Videosignals auf einen definierten Helligkeitpegel verwendet werden. Man erreicht zum Beispiel eine additive Weißwertkorrektur, wenn ein bestimmter Bereich der Sensorzeile mit definierter Helligkeit beleuchtet wird und das Ausgangssignal dieses Zeilenbereichs auf definierten Pegel eingeregelt wird. Dem Ausgangssignal läßt sich dann entnehmen, wie stark welche Zeilenbereiche von der Referenzhelligkeit abweichen.

**Ansprüche**

1. Schaltungsanordnung zur Klemmung der in einer Videosignalfolge eines optischen, mehrere CCD-Sensoren aufweisenden Zeilenabtasters enthaltenen Schwarzreferenz-Signale, unter Verwendung eines Videoverstärkers und eines diesem nachgeschalteten Analog/Digital-Wandlers sowie eines vom Schwarzreferenz-Signal gesteuerten Speicherelements für eine den Videoverstärker beeinflussende Stellgröße, **gekennzeichnet durch** ein mit allen Ausgängen des Analog/Digital-Wandlers (5) verbundenes NOR-Glied (NOR), dessen Ausgang mit dem Eingang eines durch das Schwarzreferenz-Signal (BR) getakteten D-Flip-Flops (D-FF) verbunden ist, und durch einen über ein Netzwerk mit dem Ausgang des D-Flip-Flops (D-FF) verbundenen und bezüglich seiner Eingangsspannung symmetrisch angesteuerten Integrator (6), dessen rampenförmig abfallende bzw. ansteigende Ausgangsspannung am Eingang des Videoverstärkers (4) zur Signalspannung des Zeilenabtasters (2) hinzuaddiert wird.

2. Schaltungsanordnung nach Anspruch 1, **gekennzeichnet durch** ein aus einer zwischen Ausgang und Eingang des Integrators eingeschalteten Kapazität (C1) und einem Eingangswiderstand (R8) gebildetes Zeitglied, dessen die Steilheit der Rampenspannung des Integrators (6) bestimmende Zeitkonstante so gewählt ist, daß ein einer Quantisierungsstufe des Analog/Digital-Wandlers (5) entsprechender Spannungshub in einer Zeitspanne von n Zeilenzykluszeiten stattfindet.

3. Schaltungsanordnung nach Anspruch 1 oder 2, **dadurch gekennzeichnet,** daß dem Eingang des Videoverstärkers (4) ein Spannungsteiler-Netzwerk (R3, V1, R4) zugeschaltet ist, dessen zwischen Spannungsteilerabgriff und Verstärkereingang liegender Widerstand (R4) parallel zu gleich großen Widerständen (R5, R6) am Ausgang des Zeilensensors (2) bzw. Integrators (6) geschaltet ist.

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.3) |
|---|---|---|---|
| A | EP-A-0 220 894 (RANK CINTEL)<br>* Seite 1, Zeilen 7-11; Seite 6, Zeile 24 - Seite 7, Zeile 29 * | 1,2 | H 04 N 5/18 |
| A | SMPTE JOURNAL, Band 87, Januar 1978, Seiten 15-19, Scarsdale, US; Y. ETO et al.: "Digital processing amplifier and color encoder"<br>* Seite 16, rechte Spalte, Zeile 30 - Seite 17, linke Spalte, Zeile 23 * | 1,2 | |
| A | EP-A-0 074 683 (PHILIPS ELECTRONIC & ASSOCIATED INDUSTRIES LTD)<br>* Seite 1, Zeile 11 - Seite 4, Zeile 6 * | 1-3 | |
| A | PATENT ABSTRACTS OF JAPAN, Band 11, Nr. 329 (E-552)[2776], 27. Oktober 1987; & JP-A-62 116 063 (CANON INC.) 27-05-1987 | 1 | |
| A | PATENT ABSTRACTS OF JAPAN, Band 11, Nr. 41 (E-478)[2488], 6. Februar 1987; & JP-A-61 208 386 (ALPS ELECTRIC CO. LTD) 16-09-1986 | 1,2 | RECHERCHIERTE SACHGEBIETE (Int. Cl.3)<br><br>H 04 N |
| A | PATENT ABSTRACTS OF JAPAN, Band 7, Nr. 236 (E-205)[1381], 20. Oktober 1983; & JP-A-58 124 373 (NIPPON HOSO KYOKAI) 23-07-1983 | 1,3 | |

Der vorliegende Recherchenbericht wurde für alle Patentansprüche erstellt

| Recherchenort | Abschlußdatum der Recherche | Prüfer |
|---|---|---|
| DEN HAAG | 31-05-1989 | PIGNIEZ T.J.P. |